# EUROPEAN PATENT SPECIFICATION

(11) **EP 0 869 893 B1**
(45) Date of publication and mention of the grant of the patent: **25.08.1999**
(21) Application number: 95935618.9
(22) Date of filing: 19.10.1995
(51) Int. Cl.: B62B 3/02, A47B 31/00, B64D 11/00

(54) **A DEVICE AND A METHOD FOR TREATING CATERING CONTAINERS TO BE USED IN AIRCRAFT**
VORRICHTUNG UND VERFAHREN ZUR HANDHABUNG VON, IN FLUGZEUGEN VERWENDBAREN SERVIERBEHÄLTERN
DISPOSITIF ET PROCEDE DE TRAITEMENT DE CONTENEURS DE RESTAURATION UTILISABLES DANS DES AERONEFS

(43) Date of publication of application: 14.10.1998
(73) Proprietor: KLM Catering Services Schiphol B.V., 1117 ZS Schiphol Airport (NL)
(72) Inventor: TAAL, Albert, NL-2582 RZ Den Haag (NL)
(74) Representative: Bakkum, Ruben Joseph
(86) International application number: NL9500362
(87) International publication number: WO9714598

(56) References cited:
- WO-A-92/06617
- DE-A- 2 811 194
- FR-A- 2 424 723
- US-A- 2 424 355

## Description

The invention relates to a vehicle for simultaneously transporting a number of catering containers of certain dimensions in particular to be used in an aircraft, said vehicle comprising a frame provided with wheels, said frame substantially having the shape of a rectangular parallelepiped, having a length and height each being greater than twice the width thereof. The meals and other things, such as beverages, crockery, glasses, napkins etc., which are used during the flight of a passenger plane, are often brought on board in containers, which are dimensioned such that they can be placed in compartments of the aircraft that are intended for that purpose. A container of this type will for example have a height of 47 cm, a width of 30 cm and a length, or depth, of 43 cm. Such a container furthermore has a door on its front side, which door can be fully opened until it has pivoted through about 270° and butts against the sidewall of the container. A container of this type is furthermore provided with a handle on its upper side, so that the container can be readily lifted. The empty weight of such a container may for example be 6 kg, whilst a filled container will for example weigh 25 kg.

Although their shape and weight make such containers suitable for use in aircraft, containers of this type are less efficient as regards their transport to and from an aircraft.

There are racks on wheels, in which the containers can be placed in side-by-side relationship, one on top of the other, after which such a rack can be pushed ahead and be taken along in the lorry which is to take the catering containers to the aircraft. Then the containers are carried into the aircraft, one at a time, because the rack is too wide and too high to be driven into the aircraft. After the containers have been used in the aircraft, they are carried out of the aircraft, one at a time, and placed in the racks again, after which the racks with the containers are transported to the place where the remnants are removed from the containers. Then the containers are placed on the same racks again and transported to the washing facility, where the containers are to be cleaned. It is important that the doors of the containers are fully open during said cleaning. After being cleaned the containers are filled again and placed in racks, in order to be transported to the aircraft again. Consequently the containers are removed from the racks and placed back in said racks quite frequently.

The object of the invention is to provide a vehicle for the transport of containers of this type, whereby the handling of said containers is considerably less laborious. In order to accomplish that objective the vehicle according to the invention comprises a rectangularly shaped in use horizontally oriented bottom and an in use horizontally oriented upper frame part, said frame part and bottom being connected to each other by connecting ribs, each connecting rib extending in one of the vertical planes defined by the length of the parallelepiped, whereby at least two diagonally opposite positions corresponding to the lines of intersection between adjacent vertical planes of the parallelepiped are free from any connecting rib. In this way doors of containers placed in the vehicle, which doors can pivot about an axis located near said ribs, can be pivoted through an angle of more than 90°. In a preferred embodiment of the invention said pivoting may take place through nearly 270°. This makes it possible to pivot the doors of the containers present in the vehicle in such a manner that the container does not have to be removed from the vehicle in order to be filled, emptied or cleaned, whilst the doors may remain closed during transport of the containers.

In a preferred embodiment of the invention the frame has a width which substantially corresponds with the width of the containers to be transported, and a length which substantially corresponds with twice the length of the containers to be transported. The containers may be placed on the vehicle in such a manner that their rear sides butt against each other, so that the doors of the containers can be opened and closed at both ends of the vehicle. Preferably the frame has a height which substantially corresponds with twice the height of the containers to be transported. Vehicles configured in this manner may have dimensions which substantially correspond with the dimensions of the mobile containers, or trolleys, which are used for distributing meals and the like in aircraft, which trolleys have a comparatively small width, so that they can move through the relatively narrow aisle of an aircraft. Since the dimensions of the vehicle according to the invention on the one hand and said trolley on the other hand substantially correspond, whilst moreover the doors of the containers placed on the vehicle are located at the same place as the doors of the aforesaid trolley, it is possible to clean the vehicle, inclusive of the containers present thereon, in the same washing machine as the aforesaid trolleys. Moreover, it is possible to use the vehicle according to the invention with the containers placed thereon as a trolley for distributing meals and the like in aircraft.

According to another aspect of the invention the bottom part of the frame, on which bottom part two containers may be supported, is provided with an upright edge, at least along part of its circumference, so that the containers placed on said bottom part cannot slide off. This may be significant because the vehicle according to the invention provides little lateral support for the containers, so that the containers might easily slide off the vehicle. Since the containers can be held with a handle on their upper side, they can be readily placed within said upright edge on the bottom part of the frame.

After the first two containers have been placed on the bottom part of the frame, two containers may be placed on top of said first two containers. Also these two containers may readily slide off the vehicle again. In order to prevent this the upper surface of the frame is according to another aspect of the invention provided with a downwardly extending edge, which is capable of engaging, at least partially so, around the upper parts of two containers which are placed on top of two containers present on the bottom part of the frame.

Preferably the part of the frame on which the downwardly extending edge is provided can be raised, so that said edge can readily be provided around the two containers once they are placed on the vehicle, and fixation means are provided, which are capable of retaining the hinged part of the frame in the raised position. This will be explained in more detail hereafter by means of an embodiment.

According to another aspect of the invention the upper frame part may furthermore be provided, at least along part of its circumference, with an upright edge, which may extend around at least part of the bottom portion of two containers which are placed on the frame as the fifth and sixth container respectively. In this manner it is possible to move six containers with the vehicle, which are all placed sufficiently firmly on the vehicle.

According to another aspect of the invention cross connections of the frame are only provided near the bottom part and near the upper part of the frame, so that also large, flat objects can be transported with the vehicle. Such objects are for example waste bins, which are used in aircraft and which have typical dimensions, namely high and long, but are comparatively narrow.

The invention furthermore relates to a method for transporting catering containers having certain dimensions to be used in an aircraft, whereby a number of containers is placed on a vehicle according to the present invention, said method being characterized in that the containers are placed and secured on the vehicle in such a manner that the doors of the containers can be fully opened.

The invention furthermore relates to a method for treating catering containers to be used in aircraft, by driving them through a cleaning device with their doors open, whereby according to the invention a number of smaller containers are placed in a vehicle according to the present invention, in such a manner that the vehicle with the containers with their doors open has substantially the same dimensions as said vehicle as such, after which the vehicle is passed through the same cleaning device.

It will be apparent that by using the invention the number of operations with the individual containers, in particular taking them out of a rack and placing them in a rack each time, is reduced considerably, so that the use of the vehicle according to the invention may result in considerable savings.

Further aspects of the invention will be explained in the description of the Figures and defined in the claims, which aspects may be used both separately and in combination with each other.

Hereafter an embodiment of a vehicle according to the invention will be described by way of illustration with reference to the drawing, in which:
Figure 1 is a perspective view of an embodiment of a vehicle;
Figure 2 shows the same vehicle, on which two containers are provided; and
Figure 3 shows a detail of Figure 1.

The embodiment is only shown diagrammatically in the Figures, and corresponding parts are numbered alike in the various Figures.

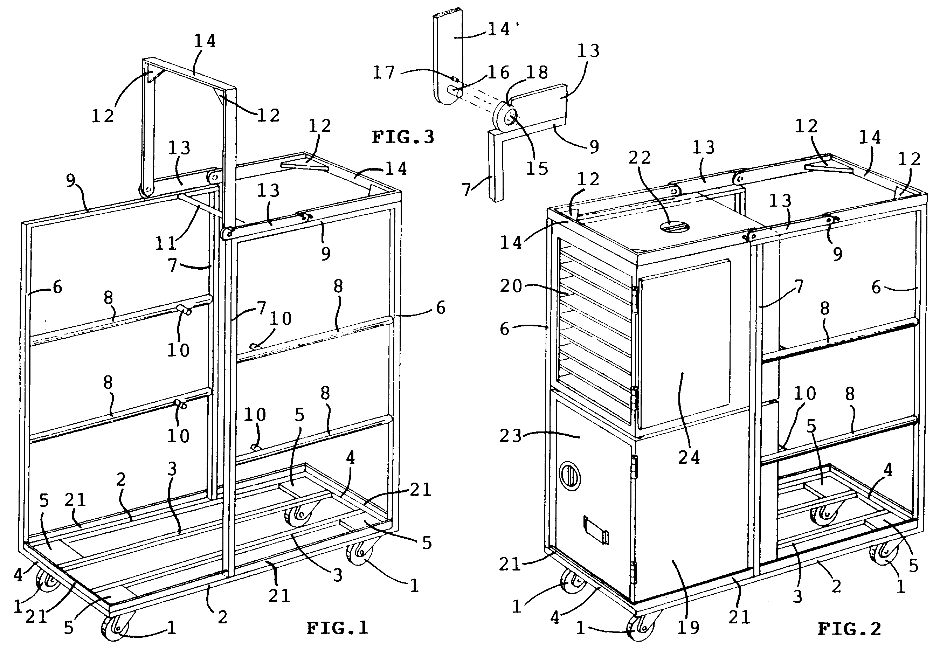

The vehicle according to Figure 1 is provided with four wheels 1, which support the frame of the vehicle. Preferably said wheels are castors, so that the vehicle can be pushed along in every direction.

The frame of the vehicle is made of stainless steel parts, which are welded together. The bottom part of the frame, on which the wheels 1 are mounted, consists of a rectangular framework comprising four square sections 2, 3 lengthwise and square sections 4, which are welded to said sections 2, 3, crosswise. The supporting plates 5 of the castors 1 are secured in said framework.

Four vertical, square sections 6, 7 (i.e. hollow beams having a certain section) are provided on the bottom part of the frame, whereby two of said sections 6 are provided diagonally opposite each other in the corner points of the rectangular bottom part. The other two vertical sections 7 are secured near the central portion of the horizontal sections 2. The vertical sections 6 and 7 are interconnected by horizontal sections 8, 9, which all extend in the longitudinal direction of the vehicle. The length of the horizontal sections 8, 9 is greater than half the length of the vehicle, so that the beams 8, 9 partially overlap, seen in side view.

The horizontal beams 8 are provided with cams 10 extending perpendicularly to said sections 8 and inwardly into the frame, said cams being located halfway the length of the vehicle. A cross beam 11 is provided in the upper part of the vehicle, in the same vertical transverse plane in which the cams 10 are located, which cross beam interconnects the two sections 9.

A framework consisting of a flat, strip-shaped material is provided in the upper part of the frame, along the entire circumference thereof, which framework is stiffened with triangular plates 12. Said framework is built up of three parts, a central part consisting of parts 13 fixed to the frame, and two U-shaped parts 14, which can both be raised. Figure 1 shows one of said parts 14 in raised condition. When being raised the U-shaped part 14 pivots with respect to the fixed parts 13, which parts 13 are provided with a hole for that purpose, said holes accommodating pins which are secured to the ends of the U-shaped part 14.

Figure 3 shows the hinged connection between the U-shaped part 14 and the fixed part 13 in more detail. The Figure thereby shows that the part 13 is provided with a hole 15, into which pin 16 can extend, which pen 16 is secured to the end of the U-shaped part 14. The U-shaped part 14 is moreover provided with a pin 17, which can slip into recess 18 of the fixed part 13 in the raised position. Hole 15 is dimensioned such with respect to pin 16 that sufficient play is available for lifting pin 17 out of recess 18, after which the U-shaped part 14 can be let down. It will be apparent that in this manner the U-shaped part 14 can readily be fixed in its vertical position.

Figure 2 shows the manner in which two containers 19, 20 are provided in the vehicle. The lower container 19 is positioned within an edge 21 provided along the bottom part of the frame, so that said container cannot slide off the vehicle. Since the containers are provided with a handle 22 on their upper sides, they can be readily placed on the vehicle. The containers bear with their rear sides against the cams 10.

After the two containers 20 have been placed in the frame, one on top of the other, the respective U-shaped part 14 of the upper part of the frame can be let down, as is shown in Figure 2. As a result of this the edge of the strip-shaped material of which the parts 13 and 14 are made will slip around the upper container 20, so that also this container is locked against being displaced.

Figure 2 shows that the door 23 of the lower container is closed and how the door 24 of the upper container is fully open, that is, pivoted through an angle of about 270°. This opened door can be secured in the open position by locking means (not shown).

From Figure 2 it will be apparent that when four containers 19, 20 are places in the frame, two more containers may be provided on top of said four containers, which cannot slide off the vehicle because the bottom side of said two uppermost containers falls within the framework formed by the upper edge of parts 13 and 14. In this manner six containers can readily be transported, whereby the doors of all six containers can be opened and closed.

If containers are used whose height does not correspond with half the height of the frame, it will still be possible to use the vehicle. Such containers can always be placed on the upper part and on the bottom part of the frame, after which, dependent on the height of the container, several containers may be placed on the two lower containers.

## Claims

1. A vehicle for simultaneously transporting a number of catering containers (20) of certain dimensions in particular to be used in an aircraft, said vehicle comprising a frame provided with wheels (1), said frame substantially having the shape of a rectangular parallelepiped, having a length and height each being greater than twice the width thereof, said frame comprising a rectangularly shaped in use horizontally oriented bottom and an in use horizontally oriented upper frame part, said frame part and bottom being connected to each other by connecting ribs (6,7), each connecting rib (6,7) extending in one of the vertical planes defined by the length of the parallelepiped, whereby at least two diagonally opposite positions corresponding to the lines of intersection between adjacent vertical planes of the parallelepiped are free from any connecting rib (6,7).

2. A vehicle according to claim 1, characterized in that said frame has a width which substantially corresponds with the width of the containers (20) to be transported, and a length which substantially corresponds with twice the length of the containers (20) to be transported.

3. A vehicle according to claim 2, characterized in that said frame has a height which substantially corresponds with twice the height of the containers (20) to be transported.

4. A vehicle according to any one of the preceding claims, characterized in that the bottom part of the frame, on which bottom part two containers (20) may be supported, is provided with an upright edge (21), at least along part of its circumference.

5. A vehicle according to any one of the preceding claims, characterized in that the upper frame part is provided with a downwardly extending edge, which is capable of engaging, at least partially so, around the upper parts of two containers (20) which are placed on top of two containers (20) present on the bottom part of the frame.

6. A vehicle according to claim 5, characterized in that the part (14) of the frame on which the downwardly extending edge is provided can be raised.

7. A vehicle according to any one of the preceding claims, characterized in that the upper frame part is furthermore provided, at least along part of its circumference, with an upright edge, which may extend around at least part of the bottom portion of two containers which are placed on the frame as the fifth and sixth container.

8. A vehicle according to any one of the preceding claims, characterized in that cross connections (4, 11, 14) of the frame are only provided near the bottom part and near the upper part of the frame.

9. A vehicle according to one or more of the preceding claims, characterized in that it accommodates one or more containers (20).

10. A method for transporting catering containers (20) having certain dimensions to be used in an aircraft, whereby a number of containers (20) is placed on a vehicle according to one or more of claims 1-9, characterized in that said containers (20) are placed and secured on the vehicle in such a manner that the doors (23) of the containers (20) can be fully opened.

11. A method for cleaning catering containers (20) to be used in an aircraft, by driving them through a cleaning device with their doors (23) open, characterized in that a number of containers (20) are placed in a vehicle according to one or more of claims 1-9 in such a manner that the vehicle with the containers (20) with their doors (23) open has substantially the same dimensions as said vehicle as such, after which the vehicle is passed through the same cleaning device.

## Patentansprüche

1. Wagen zum gleichzeitigen Transportieren einer Anzahl von Servierbehältern (20) mit bestimmten Abmessungen, insbesondere zur Verwendung in einem Flugzeug, wobei der Wagen einen mit Rädern (1) versehenen Rahmen umfaßt, der im wesentlichen die Form eines rechtwinkligen Parallepipeds mit einer Länge und Höhe aufweist, die jeweils mehr als doppelt so groß wie seine Breite sind, und wobei der Rahmen ferner einen rechtwinklig geformten, bei der Benutzung horizontal ausgerichteten Boden und ein bei der Benutzung horizontal ausgerichtetes oberes Rahmenteil aufweist, wobei dieses Rahmenteil und der Boden über Verbindungsrippen (6, 7) miteinander verbunden sind und sich jede Verbindungsrippe (6, 7) in einer der vertikalen Ebenen erstreckt, die durch die Länge des Parallepipeds festgelegt sind, und wobei wenigstens zwei sich diagonal gegenüberliegende Positionen, die den Schnittlinien zwischen benachbarten vertikalen Ebenen des Parallelepipeds entsprechen, keinerlei Verbindungsrippe (6, 7) aufweisen.

2. Wagen nach Anspruch 1, dadurch gekennzeichnet, daß der Rahmen eine Breite, die im wesentlichen der Breite der zu transportierenden Behälter (20) entspricht, und eine Länge aufweist, die im wesentlichen dem Zweifachen der Länge der zu transportierenden Behälter (20) entspricht.

3. Wagen nach Anspruch 2, dadurch gekennzeichnet, daß der Rahmen eine Höhe aufweist, die im wesentlichen dem Zweifachen der Höhe der zu transportierenden Behälter (20) entspricht.

4. Wagen nach einem der vorhergehenden Ansprüche, dadurch gekennzeichnet, daß das untere Teil des Rahmens, auf dem zwei Behälter (20) abgestützt werden können, zumindest entlang eines Teils seines Umfangs mit einer nach oben ragenden Kante (21) versehen ist.

5. Wagen nach einem der vorhergehenden Ansprüche, dadurch gekennzeichnet, daß das obere Rahmenteil mit einer nach unten ragenden Kante versehen ist, die zumindest zum teilweisen Umgreifen der Oberteile von zwei Behältern (20), die auf zwei am unteren Teil des Rahmens vorhandenen Behältern (20) angeordnet sind, in der Lage ist.

6. Wagen nach Anspruch 5, dadurch gekennzeichnet, daß das Teil (14) des Rahmens, auf dem die nach unten verlaufende Kante ausgebildet ist, angehoben werden kann.

7. Wagen nach einem der vorhergehenden Ansprüche, dadurch gekennzeichnet, daß das obere Rahmenteil außerdern, zumindest entlang eines Teils seines Umfangs, mit einer nach oben ragenden Kante versehen ist, die sich zumindest um einen Teil des unteren Abschnitts zweier Behälter erstrecken kann, die als der fünfte und der sechste Behälter auf dem Rahmen angeordnet sind.

8. Wagen nach einem der vorhergehenden Ansprüche, dadurch gekennzeichnet, daß Querverbindungen (4, 11, 14) des Rahmens nur nahe dem unteren Teil und nahe dem oberen Teil des Rahmens ausgebildet sind.

9. Wagen nach einem oder mehreren der vorhergehenden Ansprüche, dadurch gekennzeichnet, daß er einen oder mehrere Behälter (20) aufnimmt.

10. Verfahren zum Transportieren von Servierbehältern (20), die bestimmte Abmessungen aufweisen und in einem Flugzeug verwendet werden sollen, wobei eine Anzahl von Behältern (20) auf einem Wagen nach einem oder mehreren der Ansprüche 1 bis 9 untergebracht wird, dadurch gekennzeichnet, daß die Behälter (20) auf dem Wagen so untergebracht und befestigt werden, daß die Türen (23) der Behälter (20) vollständig geöffnet werden können.

11. Verfahren zum Reinigen von Servierbehältern (20) zur Verwendung in einem Flugzeug, wobei man sie mit offenen Türen (23) durch eine Reinigungseinrichtung führt, dadurch gekennzeichnet, daß eine Anzahl von Behältern (20) in einem Wagen nach einem oder mehreren der Ansprüche 1 bis 9 so untergebracht wird, daß der Wagen mit den Behältern (20), bei geöffneten Türen (23) derselben, im wesentlichen dieselben Abmessungen wie der Wagen als solcher aufweist, wonach der Wagen durch diese Reinigungseinrichtung geführt wird.

## Revendications

1. Véhicule pour transporter simultanément un nombre de conteneurs de restauration (20) de certaines dimensions, en particulier devant être utilisés dans un avion, ledit véhicule comprenant un châssis muni de roues (1), ledit châssis ayant sensiblement la forme d'un parallélépipède rectangle, ayant une longueur et une hauteur qui représentent chacune plus du double de la largeur de celui-ci, ledit châssis comprenant un fond de forme rectangulaire, orienté horizontalement à l'utilisation, et une partie de châssis supérieure orientée horizontalement a l'utilisation, ladite partie de châssis et ledit fond étant connectés l'un à l'autre par des barres de connexion (6,7), chaque barre de connexion (6,7) s'étendant dans l'un des plans verticaux définis par la longueur du parallélépipède, ce par quoi au moins deux positions diagonalement opposées correspondant aux lignes d'intersection entre des plans verticaux adjacents du parallélépipède sont exemptes de toute barre de connexion (6,7).

2. Véhicule selon la revendication 1, caractérisé par le fait que ledit châssis a une largeur qui correspond sensiblement a la largeur des conteneurs (20) devant être transportés, et une longueur qui correspond sensiblement à deux fois la longueur des conteneurs (20) devant être transportés.

3. Véhicule selon la revendication 2, caractérisé par le fait que ledit châssis a une hauteur qui correspond sensiblement à deux fois la hauteur des conteneurs (20) devant être transportés.

4. Véhicule selon l'une quelconque des revendications précédentes, caractérisé par le fait que la partie de fond du châssis, sur laquelle deux conteneurs (20) peuvent être supportés, est dotée d'une bordure (21) s'étendant vers le haut, au moins le long d'une partie de sa circonférence.

5. Véhicule selon l'une quelconque des revendications précédentes, caractérisé par le fait que la partie de châssis supérieure est dotée d'une bordure s'étendant vers le bas, qui est capable de s'engager, au moins partiellement, autour des parties supérieures de deux conteneurs (20) qui sont placés sur le dessus de deux conteneurs (20) présents sur la partie de fond du châssis.

6. Véhicule selon la revendication 5, caractérisé par le fait que la partie (14) du châssis sur laquelle la bordure s'étendant vers le bas est disposée peut être surélevée.

7. Véhicule selon l'une quelconque des revendications précédentes, caractérisé par le fait que la partie de châssis supérieure est encore dotée, au moins le long d'une partie de sa circonférence, d'une bordure s'étendant vers le haut, qui peut s'étendre autour d'au moins une partie de la partie de fond de deux conteneurs qui sont placés sur le châssis en tant que cinquième et sixième conteneurs.

8. Véhicule selon l'une quelconque des revendications précédentes, caractérisé par le fait que des connexions transversales (4, 11, 14) du châssis sont seulement disposées près de la partie de fond et près de la partie supérieure du châssis.

9. Véhicule selon l'une ou plusieurs des revendications précédentes, caractérisé par le fait qu'il reçoit un ou plusieurs conteneurs (20).

10. Procédé de transport de conteneurs de restauration (20) ayant certaines dimensions, devant être utilisés dans un avion, ce par quoi un nombre de conteneurs (20) est placé sur un véhicule tel que défini à l'une ou plusieurs des revendications l à 9, caractérisé par le fait que lesdits conteneurs (20) sont placés et fixés sur le véhicule d'une manière telle que les portes (23) des conteneurs (20) peuvent être totalement ouvertes.

11. Procédé de nettoyage de conteneurs de restauration (20) devant être utilisés dans un avion, en les faisant passer à travers un dispositif de nettoyage avec leurs portes (23) ouvertes, caractérisé par le fait qu' un nombre de conteneurs (20) est placé dans un véhicule tel que défini à l'une ou plusieurs des revendications 1 à 9 d'une manière telle que le véhicule avec les conteneurs (20) avec leurs portes (23) ouvertes a sensiblement les mêmes dimensions que ledit véhicule en tant que tel, après quoi le véhicule est amené à passer à travers le même dispositif de nettoyage.
